# EUROPÄISCHE PATENTSCHRIFT

(11) **EP 4 018 534 B1**
(45) Veröffentlichungstag und Bekanntmachung des Hinweises auf die Patenterteilung: **18.03.2026**
(21) Anmeldenummer: 20753282.1
(22) Anmeldetag: 21.07.2020
(51) Int. Cl.: H02K 3/24, H02K 3/34, H02K 3/487, H02K 9/197

(54) **STATORKÜHLUNG**
STATOR COOLING
REFROIDISSEMENT DE STATOR

(30) Priorität: 21.08.2019 DE 102019122469
(43) Veröffentlichungstag der Anmeldung: 29.06.2022
(73) Patentinhaber: Schaeffler Technologies AG & Co. KG, 91074 Herzogenaurach (DE)
(72) Erfinder: NOLTE, Christian, 97437 Haßfurt (DE); GRAMANN, Nicolai, 77871 Renchen (DE); GRAMANN, Matthias, 77871 Renchen (DE); GRAMANN, Patrick, 77871 Renchen (DE); MORGEN, Christian, 76532 Haueneberstein (DE)
(74) Vertreter: Schaeffler Technologies
(86) Internationale Anmeldenummer: PCT/DE2020/100638
(87) Internationale Veröffentlichungsnummer: WO 2021/032238

(56) Entgegenhaltungen:
- EP-A1- 3 223 394
- EP-A1- 3 484 021
- DE-A1- 102018 116 031
- DE-B- 1 017 265
- FR-A1- 2 556 146
- US-A- 5 081 382
- US-A1- 2006 119 196

## Beschreibung

Die Erfindung betrifft die Kühlung eines Stators für eine elektrische Maschine und ein dementsprechendes Verfahren zum Betrieb einer elektrischen Maschine.

Beim Betrieb einer elektrischen Maschine entsteht in der elektrischen Maschine Wärme, einmal durch die ohmschen Verluste in den elektrischen Leitern, welche die Wicklungen der Maschine bilden, andererseits auch durch Wirbelströme und Hysterese in Blechpaketen der elektrischen Maschine.

In diesem Zusammenhang ist es etwa bekannt, einen Stator einer solchen elektrischen Maschine durch einen Wassermantel zu kühlen, welcher einen Statorträger umgibt und gegen ein Gehäuse abgedichtet ist. Hierbei ist ein Wärmeleitungspfad von den elektrischen Leitern der Wicklungen über das Blechpaket des Stators zum Wassermantel relativ lang. Nachteilig kommt hinzu, dass die in Nuten des Stators angeordneten Wicklungen von einem elektrischen Isolationsmaterial, etwa Isolationspapier, umgeben sind, welches eine deutlich geringere Wärmeleitfähigkeit als Metalle im Stator aufweist, wodurch sich ein erheblicher Temperaturgradient über den Querschnitt des Isolationsmaterials ergibt. Trotz Kühlung durch den Wassermantel ist daher die Temperatur der elektrischen Leiter in den Nuten im Dauerbetrieb relativ hoch, so dass wenig Spielraum für zusätzliche Erwärmung bei kurzzeitigem Spitzenlastbetrieb verbleibt. Zu berücksichtigen ist hier auch, dass der spezifische elektrische Widerstand von Kupfer und Aluminium, der üblicherweise für die elektrischen Leiter verwendeten Materialien, mit zunehmender Temperatur steigt; damit sinkt die Effizienz der elektrischen Maschine mit zunehmender Temperatur der elektrischen Leiter.

Ein anderer Lösungsansatz in diesem Zusammenhang ist die Hohlleiterkühlung, welche beispielsweise auch aus der deutschen Patentanmeldung DE 10 2017 119 033 A1 bekannt ist. Bei reiner Hohlleiterkühlung wird auch die Wärme aus dem Blechpaket über die Hohlleiter abgeführt, was bedeutet, dass die entsprechenden Wärmemengen zunächst das Isolationspapier um die Leiter und den Leiter selbst durchlaufen müssen, ehe sie ein Kühlmittel im Inneren des Hohlleiters erreichen.

Aus der DE1017265B und der EP3223394A1 sind elektrische Maschinen mit in Nuten angeordneten gekühlten elektrischen Leitern bekannt.

Aus Montagetoleranzgründen ist beim Stator bei Blechpaket und weiteren Komponenten eine Spielanpassung erforderlich, welche zu entsprechenden Luftspalten auch in den Nuten des Stators führt. Da Luft thermisch isolierend wirkt, trägt dies zur Verschärfung der oben dargelegten Problematik bei.

Die vorgenannten thermischen Belastungen, welche beim Betrieb einer elektrischen Maschine auftreten können, müssen bei der konstruktiven Auslegung der elektrischen Maschine berücksichtigt werden und machen daher entsprechende Überauslegungen erforderlich. Dabei könnten etwa durch Verringerung von Temperaturschwankungen die Lebensdauern von Werkstoffen deutlich erhöht werden, ebenso wäre es mitunter möglich, günstigere Werkstoffe einzusetzen.

Aufgabe der Erfindung ist es daher, die Kühlung eines Stators einer elektrischen Maschine zu verbessern.

Diese Aufgabe wird gelöst durch einen Stator gemäß Anspruch 1, eine entsprechende elektrische Maschine gemäß Anspruch 4, und ein zugehöriges Verfahren zum Betrieb einer elektrischen Maschine gemäß Anspruch 7.

Die Unteransprüche enthalten jeweils vorteilhafte Weiterbildungen.

Der erfindungsgemäße Stator für eine elektrische Maschine umfasst ein Blechpaket und Windungen aus einem zumindest abschnittsweise in Nuten des Stators geführten elektrischen Leiter. Erfindungsgemäß ist ein Abstandshalter vorgesehen, der in einer Nut einen definierten Abstand zwischen dem elektrischen Leiter und dem Blechpaket gewährleistet. Bevorzugt ist selbstverständlich für jede Nut ein entsprechender Abstandshalter vorgesehen.

Aufgrund des definierten Abstandes ergibt sich in der Nut ein Zwischenraum zwischen elektrischem Leiter und dem Blechpaket des Stators. Dieser Zwischenraum bildet einen Pfad für ein Kühlmittel, welches bei Betrieb der elektrischen Maschine durch den Zwischenraum strömen kann. Auf diese Weise kann zum einen Wärme aus dem elektrischen Leiter über die gesamte Leiterfläche in der Nut in das Kühlmittel übertreten. Zum anderen kann auch Wärme aus dem Blechpaket über die gesamte Nutfläche in das Kühlmittel übertreten. Somit ist eine effiziente Kühlung des Stators, also von elektrischem Leiter wie von Blechpaket, erzielbar, sogar bei geringen Wärmeübergangskoeffizienten zwischen Kühlmittel und Leiter bzw. Blechpaket, und bei geringem Volumenstrom. Der Abstandshalter garantiert dabei die Positionierung des Leiters in der Nut und hält damit den Strömungspfad für das Kühlmittel offen.

Da der Abstandshalter den definierten Abstand zwischen dem elektrischen Leiter und dem Blechpaket gewährleistet, überträgt der Abstandshalter Kräfte zwischen elektrischem Leiter und Blechpaket. In der Folge kommt dem Abstandshalter auch die Funktion zu, ein Antriebsmoment der elektrischen Maschine zu halten und zu übertragen.

Erfindungsgemäß ist der Abstandshalter durch zwei an axial gegenüberliegenden Enden des Stators vorgesehene Fixierscheiben, bevorzugt aus elektrisch isolierendem Material, gegeben; "axial" bezieht sich hier auf eine Drehachse, um welche sich ein Rotor der elektrischen Maschine bei Betrieb der elektrischen Maschine dreht. In den Fixierscheiben sind Arretierungsnoppen für den elektrischen Leiter vorgesehen, durch welche der elektrische Leiter jeweils fixiert wird, wodurch wiederum eine definierte Position des elektrischen Leiters in einer jeweiligen Nut erzielt wird. Die Fixierscheiben können zusätzlich die Rolle eines Statorträgers übernehmen.

In einer Ausführungsform des Stators ist mindestens eine gegenüber dem Blechpaket des Stators abgedichtete Kappe vorgesehen, welche in einer Umgebung von Wickelköpfen des Stators einen Bereich zur Aufnahme eines Kühlmittels definiert. Dabei sind dann die Wickelköpfe vollständig von Kühlmittel umgeben, und Kühlmittel kann aus dem definierten Bereich in die Nuten des Stators gelangen. Insbesondere kann an beiden Enden des Stators jeweils ein Bereich zur Aufnahme eines Kühlmittels definiert sein, jeweils durch eine entsprechende gegenüber dem Blechpaket abgedichtete Kappe.

Werden Fixierscheiben als Abstandshalter verwendet, so weist vorzugsweise jede Fixierscheibe eine geschlossene Kontur am inneren Umfang des Stators auf, wodurch sich eine verbesserte Abdichtung mit den Kappen ergibt.

Insbesondere in einem betriebsbereiten Stator befindet sich in einer Nut, vorzugsweise in allen Nuten, zwischen elektrischem Leiter und Blechpaket ein Kühlmittel. Dieses ist bevorzugt ein elektrisch nicht leitendes Fluid, beispielsweise Transformatoröl.

Die erfindungsgemäße elektrische Maschine hat einen Stator wie vorstehend beschrieben. In einer Ausführungsform ist ein Abscheider für Kühlmittel vorgesehen, der dazu ausgebildet ist, aus dem Stator ausgetretenes Kühlmittel in einen Kühlkreislauf des Stators zurückzuführen.

In einer Ausführungsform ist der Stator über eine elektrisch isolierende Momentenabstützung mit einem Gehäuse der elektrischen Maschine mechanisch verbunden. Auf diese Weise wird eine Basisisolierung des Stators erzielt, ohne dass dazu in den Nuten Isolationsmaterial erforderlich ist, wodurch die Wärmeabführung durch das Kühlmittel nochmals deutlich verbessert ist. Diese Möglichkeit zur Erzielung einer Basisisolierung ist näher beschrieben in der deutschen Patentanmeldung DE 10 2019 118 122. Es ist dann ausreichend, sich in den Nuten auf eine Funktionsisolierung des elektrischen Leiters zu beschränken.

Das erfindungsgemäße Verfahren zum Betrieb einer vorstehend beschriebenen elektrischen Maschine zeichnet sich dadurch aus, dass ein Zwischenraum zwischen elektrischem Leiter und Blechpaket in einer Nut des Stators der elektrischen Maschine von einem Kühlmittel durchströmt wird. Der Zwischenraum ergibt sich dabei durch den definierten Abstand zwischen elektrischem Leiter und Blechpaket, der durch den Abstandshalter gewährleistet ist.

Im Folgenden werden die Erfindung und ihre Vorteile anhand der beigefügten Zeichnungen näher beschrieben.
- Figur 1: zeigt einen Querschnitt durch eine Nut eines erfindungsgemäßen Stators.
- Figur 2: zeigt ein Ausführungsbeispiel eines nicht erfindungsgemäßen Nuteinsatzes.
- Figur 3: zeigt eine perspektivische Ansicht eines in eine Nut eingesetzten nicht erfindungsgemäßen Nuteinsatzes.
- Figur 4: zeigt eine Draufsicht eines in eine Nut eingesetzten nicht erfindungsgemäßen Nuteinsatzes.
- Figur 5: zeigt eine perspektivische Ansicht eines erfindungsgemäßen Stators.
- Figur 6: zeigt einen Schnitt durch einen Teil eines erfindungsgemäßen Stators.
- Figur 7: zeigt eine Ausführungsform eines erfindungsgemäßen Stators.
- Figur 8: zeigt einen Ausschnitt einer Fixierscheibe.
- Figur 9: zeigt eine Draufsicht auf eine Nut.
- Figur 10: zeigt eine Ausführungsform einer erfindungsgemäßen elektrischen Maschine.
- Figur 11: zeigt eine weitere Ausführungsform einer erfindungsgemäßen elektrischen Maschine.

Die schematischen Figuren stellen nur Beispiele dar, wie die Erfindung ausgestaltet sein kann, ohne die Erfindung dabei auf die konkret gezeigten Beispiele zu beschränken. In der Beschreibung der Figuren genannte Bezugszeichen nehmen allgemein auf die Gesamtheit der Figuren Bezug.

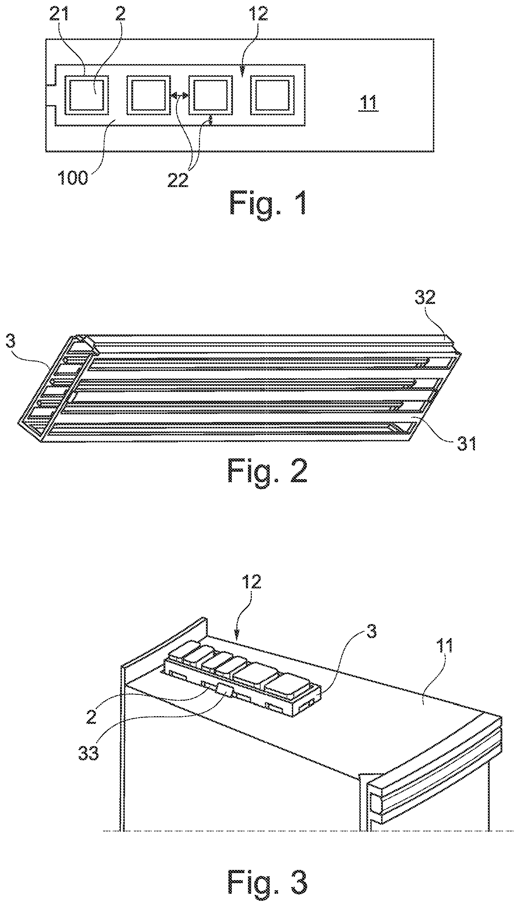

**Fig. 1** zeigt einen Querschnitt durch eine Nut 12 in einem teilweise gezeigten Blechpaket 11 eines erfindungsgemäßen Stators. In der Nut 12 befinden sich elektrische Leiter 2, welche mit einer isolierenden Lackierung 21 zwecks Funktionsisolierung umgeben sind. Zwischen den Leitern 2 untereinander sowie zwischen den Leitern 2 und dem Blechpaket 11, also der Wandung der Nut 12, ist jeweils ein definierter Abstand 22 gegeben. Dieser wird durch einen hier nicht dargestellten Abstandshalter erzielt. Durch den definierten Abstand 22 ist gewährleistet, dass das Kühlmittel 100 sich um alle elektrischen Leiter 2 herum verteilen und ebenso möglichst vollflächig mit den Begrenzungen, also der Wandung, der Nut 12 in Kontakt treten kann, um einen optimalen Wärmeaustausch zwischen den Leitern 2 und dem Kühlmittel 100 sowie zwischen dem Blechpaket 11 und dem Kühlmittel 100 zu erzielen.
**Fig. 2** zeigt eine Ausführungsform eines aus einem elektrisch isolierenden Material gefertigten nicht erfindungsgemäßen Nuteinsatzes 3, wie er im Stator als Abstandshalter verwendet werden kann. Der Nuteinsatz 3 ist käfigartig und umfasst eine Vielzahl von Stegen 31. Die Stege 31 gewährleisten in einer Nut 12 den definierten Abstand 22 zwischen elektrischen Leitern 2 untereinander und zwischen elektrischen Leitern 2 und Begrenzungen der Nut 12. Die Zwischenräume zwischen den Stegen 31 bieten Raum für die Strömung eines Kühlmittels 100. An einer Seite des Nuteinsatzes 3 weist dieser eine geschlossene Fläche 32 auf. Diese Seite ist in einer elektrischen Maschine zu einem Luftspalt zum Rotor hin orientiert und dichtet so die Nut 12 gegen den Luftspalt ab, um ein Auslaufen von Kühlmittel 100 zu vermeiden.
**Fig. 3** zeigt in perspektivischer Ansicht einen Teil eines Blechpaketes 11, mit einer Nut 12, in die ein nicht erfindungsgemäßer Nuteinsatz 3 eingesetzt ist. Ferner sind noch elektrische Leiter 2 in der Nut 12 zu erkennen. Der Nuteinsatz 3 ist in diesem Beispiel durch eine Arretiernase 33 am Blechpaket 11 befestigt.

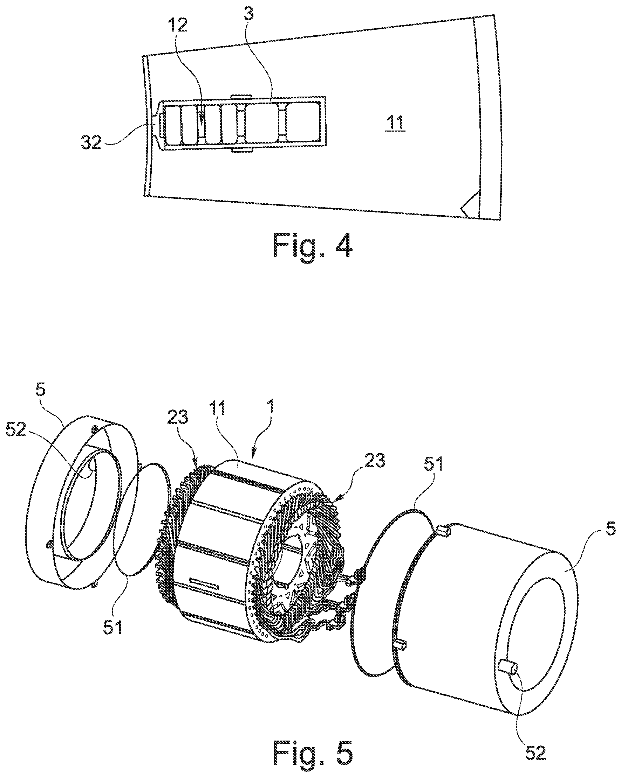

**Fig. 4** zeigt eine Draufsicht auf einen Teil eines Blechpakets 11 mit einer Nut 12. In die Nut 12 ist ein nicht erfindungsgemäßer Nuteinsatz 3, wie vorstehend bereits beschrieben, eingesetzt. Dargestellt ist insbesondere auch die am Nuteinsatz 3 ausgebildete geschlossene Fläche 32.
**Fig. 5** zeigt eine perspektivische Ansicht eines erfindungsgemäßen Stators 1 mit Blechpaket 11. Von den elektrischen Leitern sind Wickelköpfe 23 dargestellt. In der gezeigten Ausführungsform sind Kappen 5 vorgesehen, welche, in zusammengesetztem Zustand der gezeigten Anordnung, um die Wickelköpfe 23 einen Bereich für Kühlmittel 100 definieren. Zur Abdichtung zwischen dem Bereich für Kühlmittel 100 und dem Blechpaket 11 des Stators 1 sind hier Dichtringe 51 vorgesehen. Die Kappen 5 weisen einen Zulauf bzw. Ablauf 52 für Kühlmittel 100 auf.

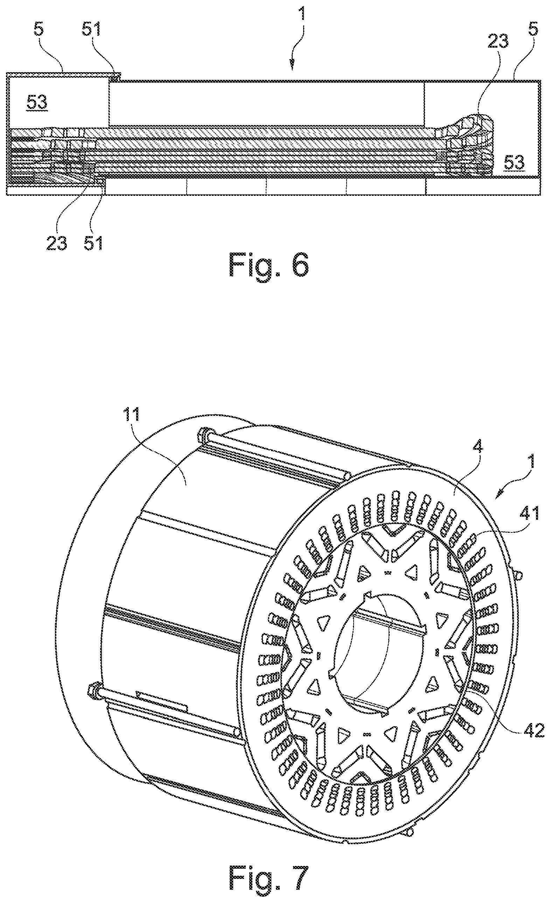

**Fig. 6** zeigt einen Schnitt durch einen Teil eines Stators 1. Gezeigt sind Wickelköpfe 23, Kappen 5 und von den Kappen 5 definierte Bereiche 53 für Kühlmittel 100 um die Wickelköpfe 23.
**Fig. 7** zeigt eine Ausführungsform eines erfindungsgemäßen Stators 1 mit Blechpaket 11. Hier ist der Abstandshalter durch zwei Fixierscheiben 4 an den axialen Enden des Stators 1 gegeben. Aus perspektivischen Gründen ist nur eine Fixierscheibe 4 erkennbar. Die Fixierscheibe 4 weist Arretierungsnoppen 41 zur Fixierung des elektrischen Leiters 2 auf, um so die definierten Abstände 22 in den Nuten 12 zu gewährleisten. In der gezeigten Ausführungsform weist die Fixierscheibe 4 ferner eine geschlossene Kontur 42 am radial inneren Umfang des Stators 1 auf, was die Abdichtung des Blechpakets 11 und die dichte Verbindung mit Kappen 5 begünstigt.

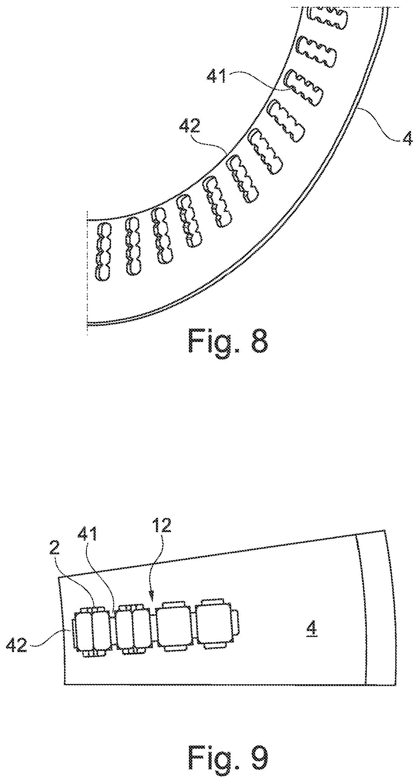

**Fig. 8** zeigt einen Ausschnitt aus einer der in der in Fig. 7 gezeigten Ausführungsform verwendeten Fixierscheiben 4. Zu erkennen sind die Arretierungsnoppen 41 und die geschlossene Kontur 42.
**Fig. 9** zeigt eine Draufsicht auf eine Nut 12 mit darüber liegender Fixierscheibe 4, von welcher nur ein Teil gezeigt ist. Dargestellt sind ferner die elektrischen Leiter 2 der Wicklungen des Stators 1, die in der Nut 12 platziert sind und von Arretierungsnoppen 41 fixiert werden. Ebenso ist ein Teil der geschlossenen Kontur 42 zu erkennen.

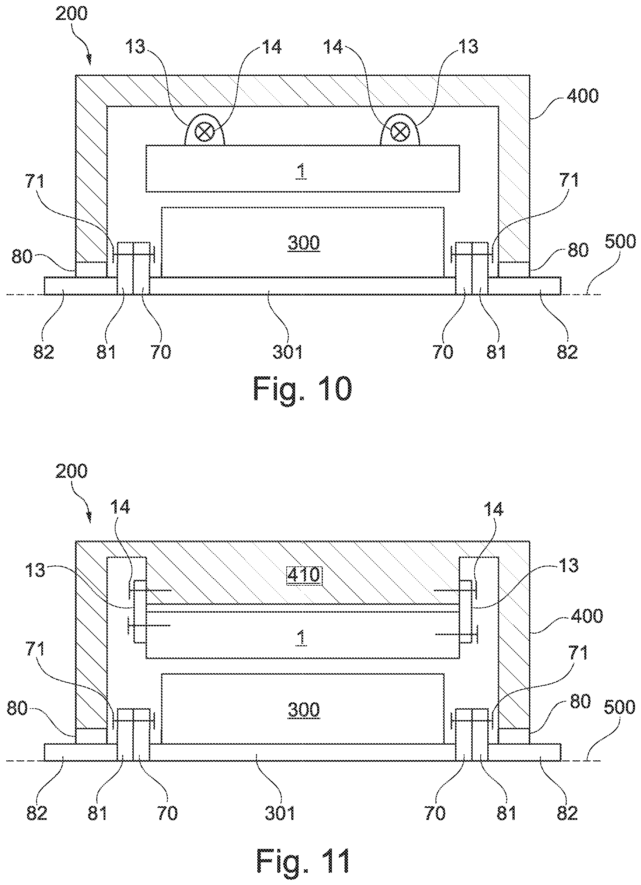

**Fig. 10** zeigt eine Ausführungsform einer erfindungsgemäßen elektrischen Maschine 200. Die elektrische Maschine 200 umfasst einen erfindungsgemäßen Stator 1, einen Rotor 300, ein Gehäuse 400 und eine Welle 301 des Rotors 300. Hier ist eine Momentenabstützung 13 aus elektrisch isolierendem Material vorgesehen, welche den Stator 1 mechanisch mit dem Gehäuse 400 verbindet, in der gezeigten Ausführungsform, ohne die Erfindung darauf zu beschränken, durch eine Schraubverbindung 14. Hierdurch wird eine mechanische Fixierung des Stators 1 gegenüber dem Gehäuse 400 erzielt, ohne dass dabei eine elektrisch leitende Verbindung zwischen Stator 1 und Gehäuse 400 gegeben ist. Daher wird eine erforderliche Basisisolierung erzielt, ohne dazu Isolationsmaterial in den Nuten 12 des Stators 1 einsetzen zu müssen. Durch den Verzicht auf das Isolationsmaterial in den Nuten 12 wird der Wärmeübergang von dem elektrischen Leiter 2 auf das Kühlmittel 100 verbessert.

Ferner weist hier die Welle 301, welche den Rotor 300 trägt, an beiden Enden jeweils einen Flansch 70 aus elektrisch isolierendem Material auf. Jeder Flansch 70 ist jeweils mit einem Flansch 81 mechanisch verbunden, etwa, und ohne die Erfindung darauf zu beschränken, über eine Schraubverbindung 71. Jeder Flansch 81 wiederum ist mit einer Lagerwelle 82 verbunden. Jede Lagerwelle 82 ist in einem Lager 80 aufgenommen, welches im Gehäuse 400 vorgesehen ist. Somit ist letztlich die Welle 301, und damit der Rotor 300, mechanisch in dem Gehäuse 400 gelagert, ohne dass eine elektrisch leitende Verbindung zwischen Rotor 300 und Gehäuse 400 entlang der Welle 301 besteht.

Gezeigt ist ferner noch eine Drehachse 500 für die elektrische Maschine 200, um die sich die Welle 301 und der Rotor 300 bei Betrieb der elektrischen Maschine 200 drehen. Nur der Vollständigkeit halber wird erwähnt, dass die Figur 10 eine Schnittansicht durch die elektrische Maschine 200 zeigt, bei der nur ein Teil der elektrischen Maschine 200 auf einer Seite der Drehachse 500 dargestellt ist. Die Drehachse 500 definiert auch die axiale Richtung für den Stator 1 im Sinne dieser Anmeldung.

**Fig. 11** zeigt eine weitere Ausführungsform einer erfindungsgemäßen elektrischen Maschine 200. Die gezeigten Elemente wurden weitestgehend bereits im Kontext der Figur 10 erläutert. Der Unterschied der hier gezeigten Ausführungsform zu der in Figur 10 gezeigten Ausführungsform besteht in der Ausgestaltung der Momentenabstützung 13 aus elektrisch isolierendem Material. Die Momentenabstützung 13 ist hier stirnseitig an einem Vorsprung 410 des Gehäuses 400 angebracht. Auch in dieser Ausgestaltung ist eine mechanische Fixierung des Stators 1 gegenüber dem Gehäuse 400 erzielt, ohne dass dabei eine elektrisch leitende Verbindung zwischen Stator 1 und Gehäuse 400 gegeben ist. Die Momentenabstützung 13 ist hier mit Stator 1 und Vorsprung 410 durch Schraubverbindungen 14 verbunden, ohne dass die Erfindung darauf beschränkt ist.

### Bezugszeichenliste

- 1: Stator
- 2: elektrischer Leiter
- 3: Nuteinsatz
- 4: Fixierscheibe
- 5: Kappe
- 11: Blechpaket
- 12: Nut
- 13: Momentenabstützung
- 14: Schraubverbindung
- 21: Lackierung
- 22: Abstand
- 23: Wickelkopf
- 31: Steg
- 32: geschlossene Fläche
- 33: Arretiernase
- 41: Arretierungsnoppen
- 42: geschlossene Kontur
- 51: Dichtringe
- 52: Zulauf / Ablauf
- 70: Flansch
- 71: Schraubverbindung
- 80: Lager
- 81: Flansch
- 82: Lagerachse
- 100: Kühlmittel
- 200: elektrische Maschine
- 300: Rotor
- 301: Welle
- 400: Gehäuse
- 410: Vorsprung
- 500: Drehachse

## Patentansprüche

1. Stator (1) für eine elektrische Maschine (200), der Stator (1) umfassend ein Blechpaket (11) und Windungen aus einem zumindest abschnittsweise in Nuten (12) des Stators (1) geführten elektrischen Leitern (2), einen Abstandshalter (4), der in einer Nut (12) einen definierten Abstand (22) zwischen elektrischen Leitern (2) untereinander und zwischen den elektrischen Leitern (2) und dem Blechpaket (11) gewährleistet,
**dadurch gekennzeichnet, dass** der Abstandshalter durch zwei an axial gegenüberliegenden Enden des Stators (1) vorgesehenen Fixierscheiben (4) gegeben ist, in welchen Arretierungsnoppen (41) für den elektrischen Leiter (2) vorgesehen sind, um so die definierten Abstände (22) in den Nuten (12) zu gewährleisten.

2. Stator (1) nach einem der vorhergehenden Ansprüche, wobei mindestens eine gegenüber dem Blechpaket (11) abgedichtete Kappe (5) vorgesehen ist, welche in einer Umgebung von Wickelköpfen (23) des Stators (1) einen Bereich (53) zur Aufnahme eines Kühlmittels (100) definiert.

3. Stator (1) nach einem der vorhergehenden Ansprüche, wobei in einer Nut (12) zwischen elektrischem Leiter (2) und Blechpaket (11) ein Kühlmittel (100) befindlich ist.

4. Elektrische Maschine (200) mit einem Stator (1) nach einem der Ansprüche 1 bis 3.

5. Elektrische Maschine (200) nach Anspruch 4, wobei ein Abscheider für Kühlmittel (100) vorgesehen ist, der dazu ausgebildet ist, aus dem Stator (1) ausgetretenes Kühlmittel (100) in einen Kühlkreislauf des Stators (1) zurückzuführen.

6. Elektrische Maschine (200) nach Anspruch 4 oder 5, wobei der Stator (1) über eine elektrisch isolierende Momentenabstützung (13) mit einem Gehäuse (400) der elektrischen Maschine (200) mechanisch verbunden ist.

7. Verfahren zum Betrieb einer elektrischen Maschine (200) nach einem der Ansprüche 4 bis 6, wobei ein Zwischenraum zwischen elektrischem Leiter (2) und Blechpaket (11) in einer Nut (12) des Stators (1) der elektrischen Maschine (200) von einem Kühlmittel (100) durchströmt wird.

## Claims

1. A stator (1) for an electric machine (200), the stator (1) comprising a laminated core (11) and windings of electrical conductors (2) guided at least partially in slots (12) of the stator (1), a spacer (4) which ensures a defined distance (22) between electrical conductors (2) and between the electrical conductors (2) and the laminated core (11) in a slot (12), **characterised in that** the spacer is provided by two fixing discs (4) which are provided at axially opposite ends of the stator (1) and in which locking projections (41) are provided for the electrical conductor (2) in order to ensure the defined distances (22) in the slots (12).

2. The stator (1) according to any one of the preceding claims, wherein at least one cap (5) is provided which is sealed with respect to the laminated core (11) and defines, in a surrounding space of end windings (23) of the stator (1), a region (53) for receiving a coolant (100).

3. The stator (1) according to any one of the preceding claims, wherein a coolant (100) is located in a slot (12) between an electrical conductor (2) and the laminated core (11).

4. An electric machine (200) having a stator (1) according to any one of claims 1 to 3.

5. The electric machine (200) according to claim 4, wherein a separator for coolant (100) is provided which is designed to return coolant (100) that has escaped from the stator (1) into a cooling circuit of the stator (1).

6. The electric machine (200) according to claim 4 or 5, wherein the stator (1) is mechanically connected to a housing (400) of the electric machine (200) via an electrically insulating torque support (13).

7. A method for operating an electric machine (200) according to any one of claims 4 to 6, wherein a coolant (100) flows through an intermediate space between an electrical conductor (2) and the laminated core (11) in a slot (12) of the stator (1) of the electric machine (200).

## Revendications

1. Stator (1) pour une machine électrique (200), le stator (1) comprenant un noyau feuilleté (11) et des enroulements d'un conducteur électrique (2) guidé au moins par sections dans des encoches (12) du stator (1), un écarteur (4) qui assure une distance définie (22) entre des conducteurs électriques (2) entre eux et entre les conducteurs électriques (2) et le noyau feuilleté (11) dans une encoche (12), **caractérisé en ce que** l'écarteur est fourni par deux disques de fixation (4) prévus aux extrémités axialement opposées du stator (1), dans lesquels des ergots de blocage (41) sont prévus pour le conducteur électrique (2) afin d'assurer les distances définies (22) dans les encoches (12).

2. Stator (1) selon l'une quelconque des revendications précédentes, dans lequel au moins un capuchon (5) scellé contre le noyau feuilleté (11) est prévu, qui définit une région (53) destinée à recevoir un liquide de refroidissement (100) dans un environnement de têtes d'enroulement (23) du stator (1).

3. Stator (1) selon l'une quelconque des revendications précédentes, dans lequel un liquide de refroidissement (100) est situé dans une encoche (12) entre le conducteur électrique (2) et le noyau feuilleté (11).

4. Machine électrique (200) comportant un stator (1) selon l'une des revendications 1 à 3.

5. Machine électrique (200) selon la revendication 4, dans laquelle un séparateur pour liquide de refroidissement (100) est prévu, qui est conçu pour renvoyer vers un circuit de refroidissement du stator (1) le liquide de refroidissement (100) qui s'est échappé du stator (1).

6. Machine électrique (200) selon la revendication 4 ou 5, dans laquelle le stator (1) est relié mécaniquement à un boîtier (400) de la machine électrique (200) par l'intermédiaire d'un support de couple (13) électriquement isolant.

7. Procédé de fonctionnement d'une machine électrique (200) selon l'une des revendications 4 à 6, dans lequel un espace intermédiaire entre le conducteur électrique (2) et le noyau feuilleté (11) dans une encoche (12) du stator (1) de la machine électrique (200) est traversé par un liquide de refroidissement (100).
